# FASCICULE DE BREVET EUROPEEN

(11) **EP 2 155 509 B1**
(45) Date de publication et mention de la délivrance du brevet: **04.07.2012**
(21) Numéro de dépôt: 08805804.5
(22) Date de dépôt: 19.05.2008
(51) Int. Cl.: B60H 1/00

(54) **SYSTEME DE CLIMATISATION POUR UN VEHICULE POURVU D'UNE CORRECTION DE L'ENSOLEILLEMENT AMELIOREE**
KLIMAANLAGENSYSTEM FÜR EIN FAHRZEUG MIT VERBESSERTER SONNENSCHEINKORREKTUR
AIR-CONDITIONING SYSTEM FOR VEHICLE WITH IMPROVED SUNSHINE CORRECTION

(30) Priorité: 08.06.2007 FR 0755600
(43) Date de publication de la demande: 24.02.2010
(73) Titulaire: Renault S.A.S., 92100 Boulogne-Billancourt (FR)
(72) Inventeur: RIPOLL, CHRISTOPHE, F-78220 Viroflay (FR); DENIAUD, NICOLAS, F-78640 Saint Germain De La Grange (FR)
(86) Numéro de dépôt international: PCT/FR2008/050858
(87) Numéro de publication internationale: WO 2009/000984

(56) Documents cités:
- DE-A1- 10 350 783
- DE-A1- 19 624 666
- US-A- 4 760 772

## Description

L'invention concerne un système de climatisation pour un véhicule, le système comprenant un module de commande du groupe de climatisation pour réguler la température à l'intérieur d'un habitacle vers une température de consigne, ledit module de commande pouvant corriger la régulation de la température dans l'habitacle en fonction d'une valeur d'ensoleillement reçu dans l'habitacle.

La climatisation tend à se généraliser dans les véhicules actuels et plus particulièrement la climatisation dite « régulée », qui permet à l'utilisateur de régler un niveau de confort souhaité en renseignant une consigne dans un module de commande de l'appareil de climatisation.

Un tel système de climatisation régulé se doit d'atteindre rapidement et de manière précise la consigne de confort quelque soit l'ensoleillement reçu à travers les vitrages de l'habitacle qui peut apporter une quantité de chaleur importante à l'intérieur de l'habitacle.

Certains systèmes, décrits par exemple dans le document de brevet US 47 60 772, tiennent compte de l'ensoleillement reçu au moyen d'un capteur de lumière infrarouge pour compenser l'influence du rayonnement solaire sur le confort thermique ressenti par les occupants, et plus particulièrement de l'angle d'irradiation ainsi que de la position du soleil au dessus de l'horizon.

Si ces systèmes peuvent s'avérer satisfaisants par temps dégagé, lorsque le ciel est nuageux, le capteur de lumière délivre alors la même information sur la quantité de rayonnement incident que par un ciel sans nuage alors que l'ensoleillement est réduit, notamment dans le spectre visible. Il s'en suit alors une surcompensation de la régulation de la température, ce qui a pour conséquence un ressenti d'inconfort par les occupants, dû à une température d'air soufflé trop frais. Un autre système, connu du document DE 103 50 783, divulgue l'utilisation conjointe l'un capteur mesurant une valeur d'ensoleillement, et d'un autre capteur dans le spectre infrarouge, détectant le rayonnement réémis par les surfaces intérieures du véhicule.

L'invention vise à améliorer les systèmes de l'art antérieur précédemment cités et se propose de remédier à leurs inconvénients, notamment de permettre une compensation de la régulation de la climatisation satisfaisante aussi bien par un ciel dégagé que par un ciel couvert par des nuages.

C'est un objet de la présente invention que de proposer un système de climatisation pour un véhicule du type précité qui comprend des moyens de correction de cette valeur d'ensoleillement pour améliorer la correction de la régulation de température dans l'habitacle notamment par temps nuageux.

Un tel système de climatisation permet d'éviter que les occupants ressentent un inconfort dû à une surcompensation de la régulation de la température dans l'habitacle pour le rayonnement incident quelque soit le type de ciel. Suivant l'invention,
- la valeur d'ensoleillement fournie au module de commande est une valeur d'ensoleillement corrigée déterminée à partir d'au moins une valeur d'ensoleillement dans le spectre visible et d'une valeur d'ensoleillement dans le spectre infrarouge. Suivant des modes particuliers de réalisation, le système de climatisation comporte l'une ou plusieurs des caractéristiques suivantes :
- la valeur d'ensoleillement corrigée est obtenue par une table de correspondance comprenant des coefficients de correction de la valeur d'ensoleillement dans le spectre infrarouge en fonction d'une valeur d'ensoleillement dans le spectre visible ;
- la correction est appliquée à la valeur d'ensoleillement dans le spectre infrarouge lorsque les valeurs d'ensoleillement dans l'infrarouge sont supérieures à un seuil prédéterminé et/ou lorsque les valeurs d'ensoleillement dans le visible sont inférieures à un seuil prédéterminé ;
- les spectres d'absorptions d'une première cellule du capteur d'ensoleillement sensible au rayonnement visible d'une part et d'une deuxième cellule du capteur d'ensoleillement sensible au rayonnement infrarouge ne comportent qu'une zone négligeable de recouvrement, et de préférence présentent des spectres d'absorption distincts ;
- la valeur d'ensoleillement dans le spectre visible est proportionnelle au rayonnement reçu dans l'habitacle à des longueurs d'ondes comprises entre 350 et 800 nm ;
- la valeur d'ensoleillement dans le spectre infrarouge est proportionnelle au rayonnement reçu dans l'habitacle à des longueurs d'ondes comprises entre 850 et 950 nm.

Un autre objet de la présente invention concerne un procédé de climatisation d'un habitacle de véhicule dans lequel on mesure des valeurs d'ensoleillement par un capteur d'ensoleillement dans le visible et dans l'infrarouge; on corrige la valeur d'ensoleillement dans l'infrarouge en fonction de la valeur de l'ensoleillement dans le visible pour obtenir une valeur d'ensoleillement corrigée; on détermine au moins l'une parmi des valeurs représentant une température d'air soufflé, un débit de ventilation, une répartition du débit d'air soufflé en fonction de la valeur d'ensoleillement corrigée ;on contrôle le module de commande du groupe de climatisation à l'aide d'au moins une des valeurs représentant une température d'air soufflé, un débit de ventilation, une répartition du débit d'air soufflé pour adapter la température de l'habitacle du véhicule à la température de consigne ;

Suivant des modes particuliers de réalisation, le procédé de climatisation comporte l'une ou plusieurs des caractéristiques suivantes :
- on corrige la valeur d'ensoleillement dans l'infrarouge en fonction de la valeur de l'ensoleillement dans le visible pour obtenir une valeur d'ensoleillement corrigée par une table de correspondance.
- on détermine au moins l'une parmi des valeurs représentant une température d'air soufflé, un débit de ventilation, une répartition du débit d'air soufflé en fonction de la valeur d'ensoleillement corrigée respectivement par des tables de correspondance.

C'est un objet de la présente invention que de proposer un système de climatisation pour un véhicule du type précité

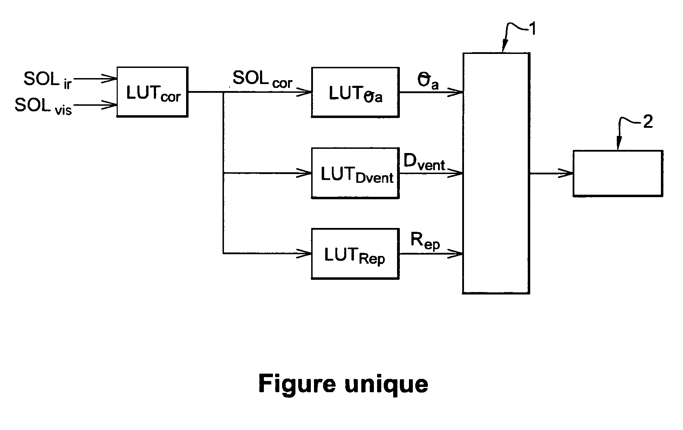

D'autres caractéristiques et avantages de l'invention apparaîtront clairement à la lecture de la description suivante du mode de réalisation non limitatif de celle-ci, en liaison avec la figure unique représentant un schéma par blocs de la commande de correction du système de climatisation par le capteur d'ensoleillement selon l'invention.

Dans la description qui va suivre, il est entendu que le signal Sx est le signal représentant la valeur physique x.

Sur la figure, donnée à titre d'exemple non limitatif, est représenté un schéma par blocs de la commande de correction du système de climatisation par le capteur d'ensoleillement selon l'invention.

Un module de commande du groupe de climatisation 1, comprenant un calculateur et un ensemble de chauffage, ventilation et d'air conditionné (HVAC), permet de faire varier la température régnant dans un habitacle 2 de véhicule automobile, en modifiant la position de volets de mixage d'air soufflé en fonction des paramètres qui lui sont appliqués.

Le système comprend également un capteur d'ensoleillement, comprenant une première cellule sensible à une lumière émise dans le spectre visible et une deuxième cellule sensible à une lumière émise dans le spectre du proche infrarouge.

De préférence, la première cellule est sensible à une lumière émise à des longueurs d'onde comprises entre 350 et 800 nm. La puissance rayonnée dans ce spectre sera alors fonction de la présence dans le ciel de nuages, celle-ci diminuant alors lorsque des nuages sont présents.

De préférence, la deuxième cellule est sensible à une lumière émise à des longueurs d'onde comprises entre 850 et 950 nm. La puissance rayonnée dans ce spectre sera alors constante qu'il y ait ou non présence de nuages dans le ciel.

Avantageusement, les spectres d'absorptions de la première cellule d'une part et de la deuxième cellule ne comportent qu'une zone négligeable de recouvrement, et de préférence les spectres d'absorption sont distincts. Si les matériaux sensibles des cellules ont des spectres d'absorption plus étendus que les plages précédemment mentionnés, les cellules peuvent comporter des filtres optiques passe-bande adaptés aux plages précitées.

Ce capteur est orienté vers le ciel, de manière à recevoir le rayonnement solaire incident et est implanté de préférence sur le pied de rétroviseur du pare-brise pour ne pas masquer la vision des occupants.

Ce capteur délivre alors un signal SSOLvis proportionnel à l'ensoleillement reçu par la première cellule dans le spectre visible SOLvis et un signal SSOLir proportionnel à l'ensoleillement reçu par la deuxième cellule dans le spectre du proche infrarouge SOLir.

A partir de ces valeurs d'ensoleillement SOLir, SOLvis, on détermine une valeur d'ensoleillement corrigée SOLcor permettant de déterminer des valeurs de température d'air soufflé θa, de débit de ventilation Dvent et de répartition Rep. Ces dernières sont déterminées de préférence par des tables de correspondance LUTθa, LUTDvent et LUTRep prédéterminées par exemple de la manière dont elles sont généralement déterminées lorsque l'on utilise uniquement la valeur d'ensoleillement dans l'infrarouge SOLir pour effectuer la compensation due à l'ensoleillement. Généralement, lorsque l'ensoleillement augmente, on réalise au moins l'une des opérations parmi la diminution de la température d'air soufflé θa, de l'augmentation du débit d'air soufflé Dvent et de la modification de la répartition Rep.

Le signal corrigé SSOLcor est obtenu à l'aide d'une table de correspondance LUTcor à partir d'au moins l'un parmi le signal d'ensoleillement dans l'infrarouge SSOLir et le signal d'ensoleillement dans le visible SSOLvis.

Cette table de correspondance contient des coefficients de correction, de préférence compris entre 0 et 1 appliqués à la valeur d'ensoleillement dans l'infrarouge SOLir en fonction de la valeur d'ensoleillement dans le visible SOLvis.

Ces coefficients sont déterminés par étalonnage en balayant les intervalles de valeurs d'ensoleillement dans le visible SOLvis et dans l'infrarouge SOLir, et en déterminant une valeur de coefficient correspondante permettant au système de climatisation de compenser l'ensoleillement à sa juste valeur lorsque le ciel est obscurci par des nuages, c'est-à-dire réduire la compensation.

Avantageusement, on peut réduire la taille de la table LUTcor en n'appliquant une correction qu'à partir de valeurs d'ensoleillement dans l'infrarouge SOLir supérieures à un seuil prédéterminé et/ou lorsque les valeurs d'ensoleillement dans le visible SOLvis sont inférieures à un seuil prédéterminé.

Par exemple, lorsque la valeur d'ensoleillement dans l'infrarouge SOLir est supérieure à un premier seuil prédéterminé et que la valeur d'ensoleillement dans le visible SOLvis est inférieure à un deuxième seuil prédéterminé, une compensation due à l'ensoleillement est réalisée dans le système de climatisation : la valeur d'ensoleillement corrigée SOLcor est égale à la valeur d'ensoleillement infrarouge SOLir multipliée par le coefficient de la table LUTcor correspondant. On obtient alors une valeur d'ensoleillement corrigée SOLcor inférieure ou égale à la valeur de l'ensoleillement dans l'infrarouge SOLir.

Le tableau suivant donne un exemple d'une table de correspondance LUTcor, donnant les coefficients en fonction des valeurs SOLir et SOLvis :

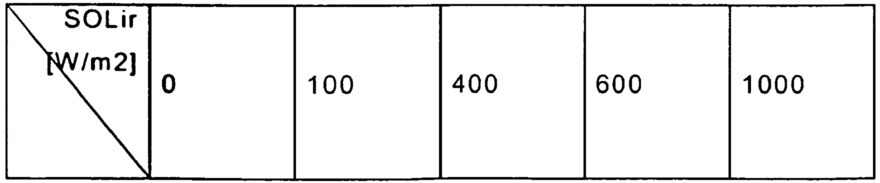

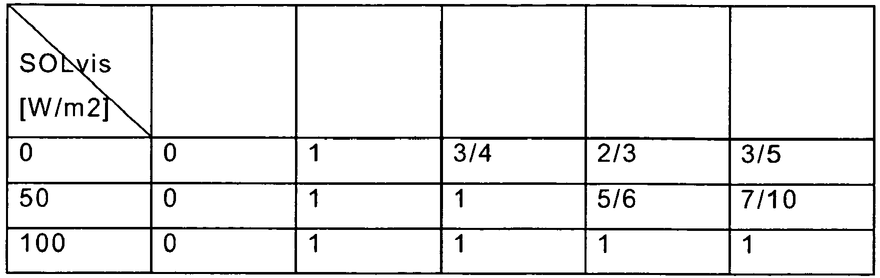

En revanche lorsque les valeurs d'ensoleillement dans le visible SOLvis et dans l'infrarouge SOLir sont supérieures à un seuil prédéterminé, aucune compensation due à l'ensoleillement n'est réalisée dans le système de climatisation.

Il est entendu que le capteur pourrait comprendre une première et une deuxième cellules, sensibles dans le spectre du proche infrarouge, disposées latéralement de chaque côté de la cellule sensible à la lumière émise dans le visible. Un tel capteur pourrait alors permettre de différencier les températures d'air soufflé par le système de climatisation entre le côté gauche et le côté droit de l'habitacle 2. Le module de commande 1 pourrait alors générer des températures différentes du côté gauche et du côté droit.

Avantageusement, le capteur utilisé pour donner les valeurs d'ensoleillement dans le visible SOLvis et dans l'infrarouge SOLir est utilisé pour des systèmes de commande d'allumage des feux et/ou des systèmes de mise en route des essuie-glaces.

## Revendications

1. Système de climatisation pour un véhicule, le système comprenant un module de commande du groupe de climatisation (1) pour réguler la température à l'intérieur d'un habitacle (2) vers une température de consigne (θc), ledit module de commande (1) pouvant corriger la régulation de la température dans l'habitacle (2) en fonction d'une valeur d'ensoleillement reçu dans l'habitacle (2), le système comprenant des moyens de correction de cette valeur d'ensoleillement pour améliorer la correction de la régulation de température dans l'habitacle (2) notamment par temps nuageux, **caractérisé en ce que** la valeur d'ensoleillement fournie au module de commande (1) est une valeur d'ensoleillement corrigée (SOLcor) déterminée à partir d'au moins une valeur d'ensoleillement dans le spectre visible (SOLvis) et d'une valeur d'ensoleillement dans le spectre infrarouge (SOLir).

2. Système de climatisation selon la revendication précédente **caractérisé en ce que** le système comprend un capteur d'ensoleillement orienté vers le ciel pour fournir les valeurs d'ensoleillement dans le spectre visible (SOLvis) et dans le spectre infrarouge (SOLir).

3. Système de climatisation selon l'une des revendications précédentes **caractérisé en ce que** la valeur d'ensoleillement corrigée (SOLcor) est obtenue par une table de correspondance (LUTcor) comprenant des coefficients de correction de la valeur d'ensoleillement dans le spectre infrarouge (SOLir) en fonction d'une valeur d'ensoleillement dans le spectre visible (SOLvis).

4. Système de climatisation selon l'une des revendications précédentes **caractérisé en ce que** la correction est appliquée à la valeur d'ensoleillement dans le spectre infrarouge (SOLir) lorsque les valeurs d'ensoleillement dans l'infrarouge (SOLir) sont supérieures à un seuil prédéterminé et/ou lorsque les valeurs d'ensoleillement dans le visible (SOLvis) sont inférieures à un seuil prédéterminé.

5. Système de climatisation selon l'une des revendications précédentes **caractérisé en ce que** les spectres d'absorptions d'une première cellule du capteur d'ensoleillement sensible au rayonnement visible d'une part et d'une deuxième cellule du capteur d'ensoleillement sensible au rayonnement infrarouge ne comportent qu'une zone négligeable de recouvrement, et de préférence présentent des spectres d'absorption distincts.

6. Système de climatisation selon l'une des revendications précédentes **caractérisé en ce que** la valeur d'ensoleillement dans le spectre visible est proportionnelle au rayonnement reçu dans l'habitacle (2) à des longueurs d'ondes comprises entre 350 et 800 nm.

7. Système de climatisation selon l'une des revendications précédentes **caractérisé en ce que** la valeur d'ensoleillement dans le spectre infrarouge est proportionnelle au rayonnement reçu dans l'habitacle (2) à des longueurs d'ondes comprises entre 850 et 950 nm.

8. Procédé de climatisation d'un habitacle de véhicule dans lequel :
- on mesure des valeurs d'ensoleillement par un capteur d'ensoleillement dans le visible (SOLvis) et dans l'infrarouge (SOLir) ;
- on corrige la valeur d'ensoleillement dans l'infrarouge (SOLir) en fonction de la valeur de l'ensoleillement dans le visible (SOLvis) pour obtenir une valeur d'ensoleillement corrigée (SOLcor) ;
- on détermine au moins l'une parmi des valeurs représentant une température d'air soufflé (θa), un débit de ventilation (Dvent), une répartition du débit d'air soufflé (Rep) en fonction de la valeur d'ensoleillement corrigée (SOLcor) ;
- on contrôle le module de commande du groupe de climatisation (1) à l'aide d'au moins une des valeurs représentant une température d'air soufflé (θa), un débit de ventilation (Dvent), une répartition du débit d'air soufflé (Rep) pour adapter la température de l'habitacle (2) du véhicule à la température de consigne (θc).

9. Procédé de climatisation d'un habitacle de véhicule selon la revendication 8 dans lequel on corrige la valeur d'ensoleillement dans l'infrarouge (SOLir) en fonction de la valeur de l'ensoleillement dans le visible (SOLvis) pour obtenir une valeur d'ensoleillement corrigée (SOLcor) par une table de correspondance (LUTcor).

10. Procédé de climatisation d'un habitacle de véhicule selon l'une des revendications 8 et 9 dans lequel on détermine au moins l'une parmi des valeurs représentant une température d'air soufflé (θa), un débit de ventilation (Dvent), une répartition du débit d'air soufflé (Rep) en fonction de la valeur d'ensoleillement corrigée (SOLcor) respectivement par des tables de correspondance (LUTθa), (LUTDvent), (LUTRep).

## Claims

1. Air-conditioning system for a vehicle, the system comprising an air-conditioning unit control module (1) for regulating the temperature inside a passenger compartment (2) toward a setpoint temperature (θc), said control module (1) being able to correct the regulation of temperature in the passenger compartment (2) as a function of a value of insolation received in the passenger compartment (2), the system comprising means of correcting this insolation value to improve the correction of the temperature regulation inside the passenger compartment (2) particularly when the weather is overcast (cloudy), **characterized in that** the insolation value supplied to the control module (1) is a corrected insolation value (SOLcor) determined from at least one value of insolation in the visible spectrum (SOLvis) and one value of insolation in the infrared spectrum (SOLir).

2. Air-conditioning system according to the preceding claim, **characterized in that** the system comprises an insolation sensor directed toward the sky to provide the values of insolation in the visible spectrum (SOLvis) and in the infrared spectrum (SOLir).

3. Air-conditioning system according to either of the preceding claims, **characterized in that** the corrected insolation value (SOLcor) is obtained from a look-up table (LUTcor) containing coefficients for correcting the value of insolation in the infrared spectrum (SOLir) as a function of a value of insolation in the visible spectrum (SOLvis).

4. Air-conditioning system according to one of the preceding claims, **characterized in that** the correction is applied to the value of insolation in the infrared spectrum (SOLir) when the values of insolation in the infrared (SOLir) are above a predetermined threshold and/or when the values of insolation in the visible (SOLvis) are below a predetermined threshold.

5. Air-conditioning system according to one of the preceding claims, **characterized in that** the absorption spectra of a first cell of the insolation sensor sensitive to visible radiation, on the one hand, and of a second cell of the insolation sensor sensitive to infrared radiation have only a negligible area of overlap, and preferably have distinct absorption spectra.

6. Air-conditioning system according to one of the preceding claims, **characterized in that** the value of insolation in the visible spectrum is proportional to the radiation received in the passenger compartment (2) at wavelengths of between 350 and 800 nm.

7. Air-conditioning system according to one of the preceding claims, **characterized in that** the value of insolation in the infrared spectrum is proportional to the radiation received in the passenger compartment (2) at wavelengths of between 850 and 950 nm.

8. Method of air-conditioning a vehicle passenger compartment, in which method:
- insolation values are measured using a sensor sensing insolation in the visible (SOLvis) and in the infrared (SOLir);
- the value of insolation in the infrared (SOLir) is corrected as a function of the value of insolation in the visible (SOLvis) in order to obtain a corrected insolation value (SOLcor);
- at least one of the values representing a blown air temperature (θa), a ventilation flow rate (Dvent), a distribution of blown air flow rate (Rep) is determined as a function of the corrected insolation value (SOLcor);
- the air-conditioning unit control module (1) is controlled using at least one of the values representing a blown air temperature (θa), a ventilation flow rate (Dvent), a distribution of the blown air flow rate (Rep) in order to adapt the temperature of the passenger compartment (2) of the vehicle to the setpoint temperature (θc).

9. Method of air-conditioning a vehicle passenger compartment according to Claim 8, in which the value of insolation in the infrared (SOLir) is corrected as a function of the value of insolation in the visible (SOLvis) in order to obtain a corrected insolation value (SOLcor) using a look-up table (LUTcor).

10. Method of air-conditioning a vehicle passenger compartment according to either of Claims 8 and 9, in which at least one of the values representing a blown air temperature (θa), a ventilation flow rate (Dvent), a distribution of blown air flow rate (Rep) is determined as a function of the corrected insolation value (SOLcor) using look-up tables (LUTθa), (LUTDvent), (LUTRep), respectively.

## Patentansprüche

1. Klimaanlage für ein Fahrzeug, wobei die Anlage ein Steuermodul der Klimatisierungseinheit (1) enthält, um die Temperatur im Inneren eines Fahrzeuginnenraums (2) auf eine Solltemperatur (θc) zu regeln, wobei das Steuermodul (1) die Regelung der Temperatur im Fahrzeuginnenraum (2) abhängig von einem Wert der im Fahrzeuginnenraum (2) empfangenen Sonneneinstrahlung korrigieren kann, wobei die Anlage Einrichtungen zur Korrektur dieses Sonneneinstrahlungswerts enthält, um die Korrektur der Temperaturregelung im Fahrzeuginnenraum (2) insbesondere bei Bewölkung zu verbessern, **dadurch gekennzeichnet, dass** der an das Steuermodul (1) gelieferte Sonneneinstrahlungswert ein korrigierter Sonneneinstrahlungswert (SOLcor) ist, der ausgehend von mindestens einem Sonneneinstrahlungswert im sichtbaren Spektrum (SOLvis) und von einem Sonneneinstrahlungswert im Infrarotspektrum (SOLir) bestimmt wird.

2. Klimaanlage nach dem vorhergehenden Anspruch, **dadurch gekennzeichnet, dass** die Anlage einen Sonneneinstrahlungssensor enthält, der zum Himmel ausgerichtet ist, um die Sonneneinstrahlungswerte im sichtbaren Spektrum (SOLvis) und im Infrarotspektrum (SOLir) zu liefern.

3. Klimaanlage nach einem der vorhergehenden Ansprüche, **dadurch gekennzeichnet, dass** der korrigierte Sonneneinstrahlungswert (SOLcor) von einer Korrespondenztabelle (LUTcor) erhalten wird, die Korrekturkoeffizienten des Sonneneinstrahlungswerts im Infrarotspektrum (SOLir) abhängig von einem Sonneneinstrahlungswert im sichtbaren Spektrum (SOLvis) enthält.

4. Klimaanlage nach einem der vorhergehenden Ansprüche, **dadurch gekennzeichnet, dass** die Korrektur an den Sonneneinstrahlungswert im Infrarotspektrum (SOLir) angewendet wird, wenn die Sonneneinstrahlungswerte im Infrarotspektrum (SOLir) höher als eine Vorbestimmte Schwelle sind, und/oder wenn die Sonneneinstrahlungswerte im sichtbaren Spektrum (SOLvis) geringer als eine Vorbestimmte Schwelle sind.

5. Klimaanlage nach einem der vorhergehenden Ansprüche, **dadurch gekennzeichnet, dass** die Absorptionsspektren einer auf die sichtbare Strahlung ansprechenden ersten Zelle des Sonneneinstrahlungssensors einerseits und einer auf die Infrarotstrahlung ansprechenden zweiten Zelle des Sonneneinstrahlungssensors nur eine vernachlässigbare Überlappungszone aufweisen, und vorzugsweise unterschiedliche Absorptionsspektren haben.

6. Klimaanlage nach einem der vorhergehenden Ansprüche, **dadurch gekennzeichnet, dass** der Sonneneinstrahlungswert im sichtbaren Spektrum zur im Fahrzeuginnenraum (2) empfangenen Strahlung bei Wellenlängen zwischen 350 und 800 nm proportional ist.

7. Klimaanlage nach einem der vorhergehenden Ansprüche, **dadurch gekennzeichnet, dass** der Sonneneinstrahlungswert im Infrarotspektrum zur im Fahrzeuginnenraum (2) empfangenen Strahlung bei Wellenlängen wischen 850 und 950 nm proportional ist.

8. Verfahren zur Klimatisierung eines Fahrzeuginnenraums, bei dem:
- Sonneneinstrahlungswerte von einem Sonneneinstrahlungssensor im sichtbaren Spektrum (SOLvis) und im Infrarotspektrum (SOLir) gemessen werden;
- der Sonneneinstrahlungswert im Infrarotspektrum (SOLir) abhängig vom Sonneneinstrahlungswert im sichtbaren Spektrum (SOLvis) korrigiert wird, um einen korrigierten Sonneneinstrahlungswert (SOLcor) zu erhalten;
- mindestens einer der Werte, die eine Gebläselufttemperatur (θa), einen Lüftungsdurchsatz (Dvent), eine Verteilung des Gebläseluftdurchsatzes (Rep) darstellen, abhängig vom korrigierten Sonneneinstrahlungswert (SOLcor) bestimmt wird;
- das Steuermodul der Klimatisierungseinheit (1) mit Hilfe mindestens eines der Werte überwacht wird, die eine Gebläselufttemperatur (θa), einen Lüftungsdurchsatz (Dvent), eine Verteilung des Gebläseluftdurchsatzes (Rep) darstellen, um die Temperatur des Fahrzeuginnenraums (2) an die Solltemperatur (θc) anzupassen.

9. Klimatisierungsverfahren eines Fahrzeuginnenraums nach Anspruch 8, bei dem der Sonneneinstrahlungswert im Infrarotspektrum (SOLir) abhängig von dem Sonneneinstrahlungswert im sichtbaren Spektrum (SOLvis) korrigiert wird, um einen durch eine Korrespondenztabelle (LUTcor) korrigierten Sonneneinstrahlungswert (SOLcor) zu erhalten.

10. Klimatisierungsverfahren eines Fahrzeuginnenraums nach einem der Ansprüche 8 und 9, bei dem mindestens einer der Werte, die eine Gebläselufttemperatur (θa), einen Lüftungsdurchsatz (Dvent), eine Verteilung des Gebläsedurchsatzes (Rep) darstellen, abhängig vom jeweils durch Korrespondenztabellen (LUTθa), (LUTDvent), (LUTRep) korrigierten Sonneneinstrahlungswert (SOLcor) bestimmt wird.
